# EUROPEAN PATENT SPECIFICATION

(11) **EP 0 993 250 B1**
(45) Date of publication and mention of the grant of the patent: **08.10.2003**
(21) Application number: 98929991.2
(22) Date of filing: 15.06.1998
(51) Int. Cl.: A23C 3/02, A23C 9/14

(54) **A METHOD FOR THE PRODUCTION OF STERILE SKIMMED MILK**
VERFAHREN ZUR HERSTELLUNG VON STERILER ENTRAHMTER MILCH
PROCEDE DE PRODUCTION DE LAIT ECREME STERILE

(30) Priority: 19.06.1997 SE 9702359
(43) Date of publication of application: 19.04.2000
(73) Proprietor: Tetra Laval Holdings & Finance S.A., 1009 Pully (CH)
(72) Inventor: LINDQUIST, Anders, S-257 31 Helsingborg (SE)
(74) Representative: Forsberg, Lars-Ake
(86) International application number: SE9801145
(87) International publication number: WO98057549

(56) References cited:
- WO-A-86/01687
- WO-A-96/36238
- US-A- 5 256 437

## Description

### TECHNICAL FIELD

The present invention relates to a method for the production of sterile skimmed milk, according in the preamble of claim 1.

### BACKGROUND ART

Sterile milk, or commercially sterile milk may be defined as a product which is free of microorganisms which can grow under the prevailing conditions. A sterile milk, packed under aseptic conditions in aseptic packages, enjoys the advantage of being able to be distributed and stored at room temperature for a lengthy period of time.

In order to produce such a commercially sterile milk, the commonest method hitherto has been UHT treatment (Ultra High Temperature), i.e. treatment of the milk at elevated temperature, normally between 135° and 150°C for between 4 and 15 seconds. As a result of the heat treatment, microorganisms are destroyed so that the resultant product is a milk of long shelf-life at room temperature. However, the drawback inherent in milk treated by the UHT method is that the high temperature imparts to the milk a cooked flavour.

With a view to reducing the contents of harmful microorganisms, use has recently been made of microfiltration, a method which is described in Swedish Patent Specification SE 451 791. In the described method, use is made of a microfilter, normally of ceramics, through which the skimmed milk fraction, after separation, is caused to pass. In the microfilter, the skimmed milk is divided into a permeate flow which has a considerably reduced content of microorganisms, and a retentate flow, which contains the majority of bacteria and spores. The retentate is treated at elevated temperature and thereafter returned to the permeate. This method gives a product which has a longer shelf-life than normal, pasteurised milk, but it must be kept under cold storage and cannot be considered as sterile. WO 96 136238 discloses reintroduction of heated retentate into the milk.

In Swedish Patent Application 9602546-5, use is made of microfiltration to produce an aseptic consumer milk. By employing a microfilter of slight pore size, milk with a higher fat content can be filtered. The permeate flow, which contains the major fraction of the thermosensitive whey proteins, is free of microorganisms. The retentate flow, which contains fat casein and microorganisms, undergoes a high temperature treatment, whereafter both of the flows are mixed. Employing this method, there will be obtained a commercially sterile product which, however, contains the destroyed microorganisms.

The present invention relates tn a method of obtaining, primarily, a commercially sterile skimmed milk for consumption, but by the admixture of the cream fraction in suitable proportions, it is possible, employing this method, to obtain a consumer milk with varying fat content The present invention also entails a method which gives a sterile product which is as good as free of destroyed microorganisms and which thereby may be considered as purer than milk produced according to prior art methods.

### OBJECTS OF THE INVENTION

One object of the present invention is to obtain a commercially sterile skimmed milk intended for.consumption, which is of extreme purity in that the majority of the destroyed microorganisms are not contained in the finished product.

A further object of the present invention is to realise a sterile milk product with improved flavour properties, since the method involves heat treatment at relatively low temperatures.

### SOLUTION

These and other objects have been attained according to the present invention in that the method of the type disclosed by way of introduction has been given the characterizing features according to the characterizing part of claim 1.

Preferred embodiments of the present invention have further been given the characterizing features as set forth in the appended subclaims.

### BRIEF DESCRIPTION OF THE ACCOMPANYING DRAWING

One preferred embodiment of the present invention will now be described in greater detail hereinbelow, with reference to the accompanying Drawing, in which:

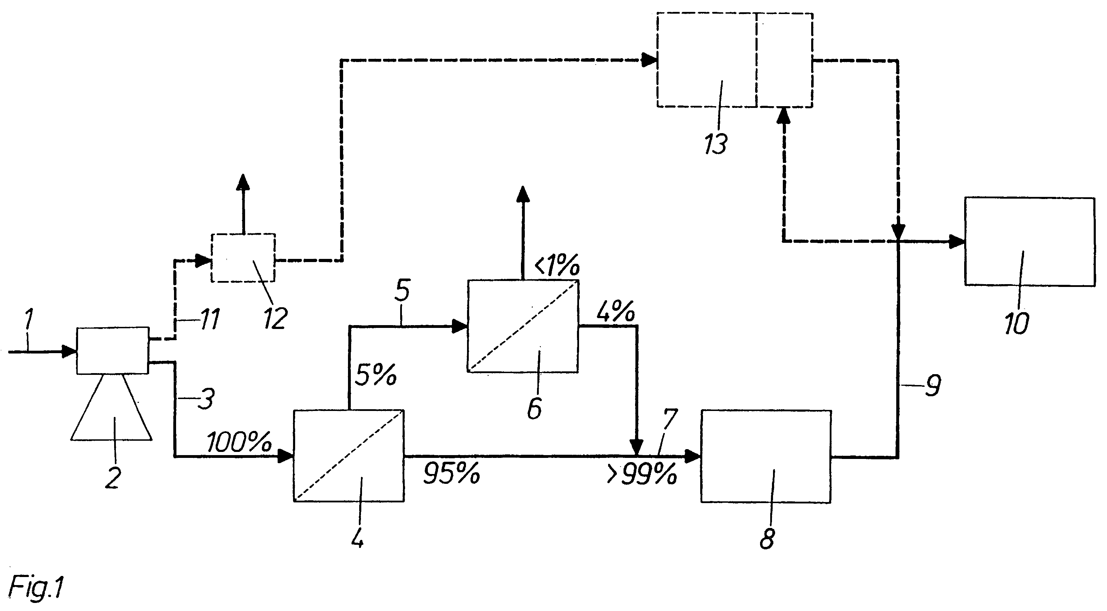

Fig. 1 is a flow diagram illustrating a facility for reducing the method according to the present invention into practice.

### DESCRIPTION OF PREFERRED EMBODIMENT

The raw milk which enters the dairy through a conduit 1 is separated at a temperature of 4-60°C. A common temperature in separation in a conventional separator 2 is 55°C In the separator 2, the milk is divided up into a cream fraction and a skimmed milk fraction. The skimmed milk has a fat content of approx. 0.05-0.15% . The cream fraction is treated separately, as will be described in greater detail below, and the present invention relates essentially to the skimmed milk fraction.

In a conduit 3, the skimmed milk is led from the separator 2 to a first microfilter 4. The microfiltration takes place most effectively if the milk is at a temperature of approx. 50°C. The microfilter 4 may, for example, be made of ceramics. In the microfilter 4, the skimmed milk fraction is divided into a permeate flow and a retentate flow.

In a first embodiment, the microfilter 4 has an effective pore size of 0.5 µm, i.e. the filter 4 should be capable of effectively separating from the permeate flow all microorganisms which are larger than or equal to 0.5 µm, including all spore normally occurring in the milk. Microorganisms are defined as all bacteria and spores normally occurring in the milk. The size of the microorganisms is defined by their least diameter, and effective separation is taken here to signify a reduction of the number of microorganisms by a factor of ≥1,000,000 (≥ log 6 reduction).

Trials have shown that a microfilter 4 according to this first embodiment of the invention, with an effective pore size which is ≥ 0.5µm, should preferably be combined with a subsequent heat treatment at a temperature of 90-105°C. By a combination of these two method steps, there will be obtained a product, a skimmed milk, which is commercially sterile, i.e. the product is free of microorganisms which can grow under the prevailing conditions.

In a second embodiment of the present invention, use is made of a microfilter 4 with an effective pore size which is ≥0.3 µm, which effectively separates the microorganisms which are ≥0.3 µm, including the major proportion of thermoresistant bacteria and all spores. In this second embodiment, the microfiltration is combined with a heat treatment at 72-98°C and this combination of method steps realises a commercially sterile product.

Depending upon filter type, how the filter 4 is constructed or how it is designed, the microfiltration may take place in one or more steps. The number of steps may depend on the size of the total quantity of filtered product which is made up by the retentate flow. The number of steps may also depend upon whether the intention is to employ the retentate flow or not, and on that efficiency which is obtained with a filter 4.

In those trials which have been carried out with a microfilter 4 displaying an effective pore size of 0.5 µm, the permeate flow constitutes 95% of the skimmed milk fraction. The retentate flow, which consequently constitutes 5% of the skimmed milk fraction, contains all separated microorganisms which are ≥0.5 µm.

With a view to obtaining a greater yield from the method according to the present invention, the retentate flow is led from the first microfilter 4 into a conduit 5 to a second microfilter 6. The second microfilter 6 may, for example, be made of ceramics and it should have at least the same effective pore size as the first filter 4. In the second filter 6, the incoming portion (5%) of the skimmed milk fraction is divided into a new permeate and retentate flow. The permeate flow from the second filter 6 consists, in the example, of 4% of the incoming skimmed milk fraction.

The retentate flow from the second filter 6, which constitutes less than 1% of the total skimmed milk fraction, thus contains all of the microorganisms separated from both of the filters 4, 6 which are ≥0.5 µm. The retentate flow from the second filter 6 is led off and not employed in the production of a sterile skimmed milk according to the invention.

The method may also include additional filters 4, 6 which cooperate correspondingly, so that the retentate from the second filter 6 is led to a third filter, and so on. But since the retentate flow already from the second filter 6 constitutes less than 1% of the total skimmed milk fraction, additional filters 4, 6 will not increase the yield from the method to any appreciable degree.

The permeate flows from the two microfilters 4, 6 are combined in a conduit 7 and led to some form of heat treatment equipment 8 which may consist of a conventional plate heat exchanger. The two combined permeate flows thus contain no microorganisms which are larger than 0.5 µm in the first embodiment and no microorganisms which are larger than ≥0.3µm in the second embodiment. Microorganisms remaining in the milk require a moderate temperature in order to be neutralised. The two permeate flows are heat treated in the heat treatment equipment 8 at 72-134°C, preferably at 90-105°C in the first embodiment and at 72-98°C in the second embodiment, for a requisite period of time.

The heat treated product, which consists of more than 99% of the skimmed milk fraction is now commercially sterile and is led in the conduit 9 further to packing in an aseptic filling machine 10, where the product is packed in aseptic packages which may be distributed and stored at room temperature. The finished product is also extremely pure, since it contains no other destroyed microorganisms than those neutralised in the heat treatment and these constitute a infinitesimal quantity of the microorganisms which initially exist in untreated milk.

The cream fraction is treated separately and, after separation, it is led in the conduit 11 via standardisation equipment 12 to a high temperature treatment unit 13, the unit 13 normally also including a homogenizer. In fat contents >12% in the cream fraction, a part of the sterile skimmed milk may be employed in the homogenization.

By selecting, in the standardisation equipment 12, a certain proportion of cream for admixture into the skimmed milk fraction, it is possible to obtain a consumer milk displaying a given, desired fat content. The standardised, sterile product is packed aseptically in accordance with the foregoing for obtaining a commercially sterile, standardised consumer milk.

As will have been apparent from the foregoing description, the present invention realises a method of producing a commercially sterile skimmed milk intended as consumer milk, the skimmed milk being extremely pure since it does not contain the quantity of destroyed microorganisms which sterile milk normally contains. Given that the milk is exposed to a temperature treatment which is considerably lower than conventional UHT milk, it possesses improved flavourproperties, and the flavour may be compared with the flavour of pasteurised milk.

## Claims

1. A method for the production of commercially sterile skimmed milk, wherein the skimmed milk is treated by microfiltration for obtaining a retentate flow and a permeate flow and wherein the permeate flow is thereafter heat treated at a temperature of 72-134°C, **characterized in that** the microfiltration takes place in two steps so that the retentate flow from a first fitter (4) is led to a second filter (6), that said filters (4, 6) are having an effective pore size, which is ≤0.5 µm, that the rententate is not employed in the production of the sterile skimmed milk, which sterile skimmed milk then is extremely pure; and that the permeate from both filters (4, 6) are combined before the heat treatment.

2. The method as in Claim 1, **characterized in that** the heat treatment of the permeate flow is preferably carried out at a temperature of 90-105°C.

3. The method as claimed in Claim 1, **characterized In that** the filters (4, 6) have an effective pore size, which is ≤0.3 µm.

4. The method as in Claim 3, **characterized In that** the heat treatment of the permeate flow is preferably carried out at a temperature of 72-98°C.

## Patentansprüche

1. Verfahren zur Herstellung von kommerziell steriler entrahmter Milch, wobei die entrahmte Milch durch Mikrofiltration zur Erzielung eines Retentat-Flusses und eines Permeat-Flusses behandelt wird, und wobei der Permeat-Fluss danach bei einer Temperatur von 72 bis 134 °C wärmebehandelt wird, **dadurch gekennzeichnet, dass** die Mikrofiltration in zwei Schritten erfolgt, sodass der Retentat-Fluss von einem ersten Filter (4) zu einem zweiten Filter (6) geleitet wird, dass die Filter (4, 6) eine effektive Porengröße aufweisen, die ≤ 0,5 µm ist, dass das Retentat bei der Herstellung der sterilen entrahmten Milch nicht eingesetzt wird, die dann extrem rein ist; und dass das Permeat aus beiden Filtern (4, 6) vor der Wärmebehandlung kombiniert wird.

2. Verfahren nach Anspruch 1, **dadurch gekennzeichnet, dass** die Wärmebehandlung des Permeat-Flusses vorzugsweise bei einer Temperatur von 90 bis 105 °C erfolgt.

3. Verfahren nach Anspruch 1, **dadurch gekennzeichnet, dass** die Filter (4, 6) eine effektive Porengröße aufweisen, die ≤ 0,3 µm ist.

4. Verfahren nach Anspruch 3, **dadurch gekennzeichnet, dass** die Wärmebehandlung des Permeat-Flusses vorzugsweise bei einer Temperatur von 72 bis 98 °C erfolgt.

## Revendications

1. Méthode de production de lait écrémé commercialement stérile, dans laquelle le lait écrémé est traité par microfiltration pour obtenir un courant de rétentat et un courant de perméat et dans laquelle le courant de perméat est ensuite traité thermiquement à une température de 72-134°C, **caractérisée en ce que** la microfiltration a lieu en deux étapes, de sorte que le courant de rétentat issu d'un premier filtre (4) soit conduit à un deuxième filtre (6), que lesdits filtres (4, 6) ont une taille de pores efficace qui est inférieure ou égale à 0,5 µm, que le rétentat n'est pas employé dans la production du lait écrémé stérile, lequel lait écrémé stérile est alors extrêmement pur ; et que les perméats issus des deux filtres (4, 6) sont associés avant le traitement thermique.

2. Méthode selon la revendication 1, **caractérisée en ce que** le traitement thermique du courant de perméat est réalisé de préférence à une température de 90-105°C.

3. Méthode selon la revendication 1, **caractérisée en ce que** les filtres (4, 6) ont une taille de pores efficace qui est inférieure ou égale à 0,3 µm.

4. Méthode selon la revendication 3, **caractérisée en ce que** le traitement thermique du courant de perméat est réalisé de préférence à une température de 72-98°C.
